(19) **Europäisches Patentamt / European Patent Office / Office européen des brevets**

(11) **EP 1 211 342 B1**

(12) **EUROPEAN PATENT SPECIFICATION**

(45) Date of publication and mention
of the grant of the patent:
**06.07.2011 Bulletin 2011/27**

(21) Application number: **01128367.8**

(22) Date of filing: **30.11.2001**

(51) Int Cl.:
*D04H 11/08* (2006.01)     *D04H 13/00* (2006.01)
*A47L 13/17* (2006.01)     *A47L 13/16* (2006.01)
*B24D 11/00* (2006.01)     *D04H 1/70* (2006.01)
*D21H 13/10* (2006.01)     *B32B 5/26* (2006.01)

(54) **Cleaning sheet**

Reinigungstuch

Chiffon de nettoyage

(84) Designated Contracting States:
**DE FR GB**

(30) Priority: **01.12.2000  JP 2000367396**
**15.06.2001  JP 2001182619**

(43) Date of publication of application:
**05.06.2002  Bulletin 2002/23**

(73) Proprietor: **KAO CORPORATION**
**Chuo-ku,**
**Tokyo (JP)**

(72) Inventors:
• **Hayase, Taeko**
**Ichikai-machi,**
**Haga-gun,**
**Tochigi (JP)**
• **Kakiuchi, Shusuke**
**Ichikai-machi,**
**Haga-gun,**
**Tochigi (JP)**

• **Mori, Kazuo**
**Ichikai-machi,**
**Haga-gun,**
**Tochigi (JP)**

(74) Representative: **Vossius & Partner**
**Siebertstrasse 4**
**81675 München (DE)**

(56) References cited:
**EP-A- 0 750 063     EP-A- 0 865 755**
**EP-A- 0 926 288     EP-A- 0 959 164**
**WO-A-01/52713     WO-A-97/21865**
**US-A- 3 837 995     US-A- 4 675 226**

• **DATABASE WPI Section Ch, Week 200060**
**Derwent Publications Ltd., London, GB; Class**
**A18, AN 2000-621292 XP002194969 & JP 2000**
**212866 A (CHISSO CORP), 2 August 2000**
**(2000-08-02)**
• **PATENT ABSTRACTS OF JAPAN vol. 016, no. 411**
**(C-0979), 31 August 1992 (1992-08-31) & JP 04**
**136252 A (KAO CORP), 11 May 1992 (1992-05-11)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a cleaning sheet which is particularly suited for cleaning a kitchen and places where water is used, such as a bathroom.

JP-A-4-136252 discloses abrasive nonwoven fabric made of core-sheath type conjugate fibers having abrasive particles in the sheath thereof. Although the abrasive nonwoven fabric feels good and exhibits long-lasting abrasive effect, the abrasive particles are liable to sink in the fibers, sometimes failing to show sufficient dirt scraping properties. Further, the abrasive particles may come off during cleaning unless they are firmly bonded to the fibers.

WO97/21865 proposes single layer abrasive nonwoven fabric having a first abrasive plane formed of abrasive fiber pieces which are shaped into spheres and having the abrasive fiber pieces distributed with a concentration gradient in the thickness direction thereof. The proposed nonwoven fabric is for use as a dry or wet duster or towel for removing dust, fats and oils. The abrasive fiber pieces are formed by thermal shrinkage of thermoplastic fibers having a fiber length of up to about 15 mm, and those having a particle diameter of 100 $\mu$m or greater allegedly exhibit an abrasive action. However, the fiber pieces which are shaped into spheres, having substantially no form of fiber, are incompetent for scraping off caked-on soils without fail.

JP-A-2000-328415 discloses short fiber nonwoven fabric made of thermally-bonding conjugate fibers having a fineness of 30 to 80 denier and a length of 3 to 40 mm, which was developed for the purpose of obtaining nonwoven fabric having a high compressive recovery and a high rate of liquid permeation for use in absorbent articles, such as disposable diapers, sanitary napkins, and absorbent dusters or sheets. It is not aimed at to scour or scrape dirt off the surface of an object to be cleaned. Containing no cellulosic fiber, the nonwoven fabric is incapable of uniform impregnation with an aqueous detergent and has poor dirty liquid retentive properties after scraping off soils.

JP-A-2000212866 discloses a thermoadhesive conjugate fiber which is used with a cellulose-based fiber. The thermoadhesive conjugate fiber contains:

(a) a first component consisting of denatured polyolefin formed by graft polymerization using a vinyl monomer containing at least one selected from an unsaturated carboxylic acid, or an unsaturated carboxylic acid anhydride; and (b) a second component consisting of a resin having a melting point higher than that of the first component. The first component is formed by continuously forming at least part of the surface of the fiber in the longitudinal direction and has a single yam size of 0.5-50 deniers, a fiber length of 3-25 mm, and a number of crimp of 5-30.

Cleansing articles, for example, a brush made of a metal and a sponge with abrasive particles such as aluminum oxide are commercially available. These cleansing articles, however, unfavorably make a scratch on a surface to be cleaned.

An object of the present invention is to provide a cleaning sheet which does not contain abrasive particles and yet exhibits sufficient scouring or scraping properties against soils.

Another object of the present invention is to provide a cleaning sheet which is capable of removing caked-on soils, such as denatured oil, baked-on substances, and scale (incrustations) in a kitchen or soap scum and scale found in a bathroom.

Still another object of the present invention is to provide a cleaning sheet which does not make a scratch on a surface to be cleaned, for example, in a kitchen and a bathroom, made of stainless, artificial marble, fluorine resin, tiles and enamel.

The above objects are accomplished by a cleaning sheet which is composed of a cleaning sheet which is composed of a liquid retentive sheet and an air-laid nonwoven fabric on at least one side of said liquid retentive sheet, said liquid retentive sheet and said air-laid nonwoven fabric being laminated together into one body,

said liquid retentive sheet constituted of cellulosic fibers and heat-fusible fibers having a fiber length of 2 to 15 mm and a fineness of 0.5 to 5 dtex,

said air-laid nonwoven fabric being obtained by forming an air-laid web containing thick thermoplastic fibers having a fiber length of 2 to 15 mm and a fineness of 10 to 150 dtex at an amount of 30 to 100 % by weight and then bonding the thick thermoplastic fibers constituting said web by fusion or with a binder at their intersections,

said cleaning sheet containing 10 to 90% by weight of said thermoplastic fibers and 10 to 90% by weight of said cellulosic fibers,

said cleaning sheet having a large number of tips of said thick thermoplastic fibers exposed on the surface of said cleaning sheet to have the capability of scouring or scraping dirt off present on a soiled surface.

The invention furthermore relates to a process for manufacturing a cleaning sheet which is composed of a liquid retentive sheet and an air-laid nonwoven fabric on at least one side of said liquid retentive sheet, comprising laminating said liquid retentive sheet and said air-laid nonwoven fabric together into one body,

wherein said liquid retentive sheet is constituted of cellulosic fibers and heat-fusible fibers having a fiber length of 2 to 15 mm and a fineness of 0.5 to 5 dtex,

the process further comprising forming an air-laid web containing thick thermoplastic fibers having a fiber length of 2 to 15 mm and fineness of 10 to 150 dtex at an amount of 30 to 100% by weight, and then bonding the thick thermoplastic fibers constituting said web by fusion or with a binder at their intersections to obtain said air-laid non-woven fabric, and wherein said cleaning sheet contains 10 to 90% by weight of said thermoplastic fibers and 10 to 90% by weight cellulosic fibers,
said cleaning sheet having a large number of tips of said thick thermoplastic fibers exposed on the surface of said cleaning sheet.

Preferred embodiments of the invention are mentioned in the dependent claims.

The present invention will be more particularly described with reference to the accompanying drawings, in which:

Fig. 1 is a schematic cross-sectional view of a cleaning sheet according to the first embodiment;
Fig. 2 is a schematic cross-sectional view of a cleaning sheet according to the second embodiment of the present invention;
Fig. 3 is a schematic perspective view of the cleaning sheet shown in Fig. 2;
Fig. 4 is a schematic cross-sectional view of a cleaning sheet according to still another embodiment (corresponding to Fig. 1);
Fig. 5 is a schematic cross-sectional view of a cleaning sheet according to yet another embodiment (corresponding to Fig. 1); and
Fig. 6 is an example of a heat embossed pattern.

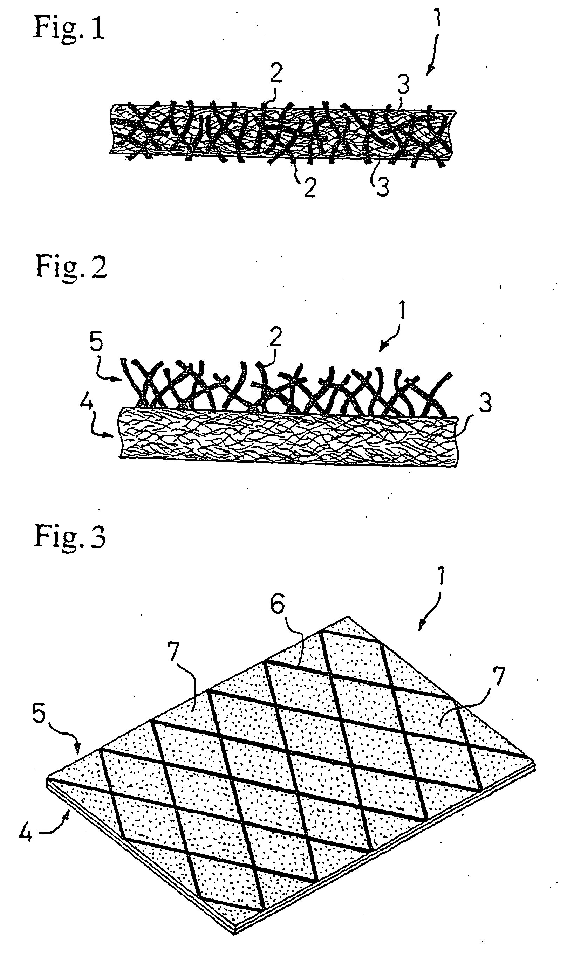

The first embodiment as shown in figures 1, 4, and 5 is described herein for reference purposes only.

The present invention will be described with particular reference to its preferred embodiments along the accompanying drawings, in which Fig. 1 is a schematic cross-sectional view of a cleaning sheet 1 according to the first embodiment.

The cleaning sheet 1 according to the first embodiment shown in Fig. 1 is an air-laid nonwoven fabric formed by air-laying fibers into a web and bonding the constituent fibers at their intersections. The cleaning sheet 1 comprises thermoplastic fibers 2 and cellulosic fibers 3.

The thermoplastic fibers 2 which can be used in the present invention have a fiber length of 2 to 15 mm and a fineness of 10 to 150 dtex which will hereinafter be referred to as thick thermoplastic fibers. Since the thick thermoplastic fibers have such a short fiber length of 2 to 15mm and a thick fineness 10 to 150 dtex, a large number of their tips are exposed on the cleaning surface of the sheet 1 and the individual thick thermoplastic fiber becomes hard to bend thereby to exhibit high scouring or scraping properties for removing soils from a soiled surface of an object.

Thermoplastic fibers shorter than 2 mm are liable to fall off the sheet 1, and the sheet comprising such short thermoplastic fibers has reduced scraping properties. Thermoplastic fibers longer than 15 mm will be entangled among themselves before passing through a screen in web formation by an air-lay method, making it difficult to prepare a uniform web. Where the thick thermoplastic fibers 2 have a length of 3 to 8 mm, particularly 4 to 6 mm, they are prevented from falling off the sheet 1 more effectively, and a fiber web having more uniformity and enhanced scraping properties can be formed.

If the fineness of the thick thermoplastic fibers 2 is less than 10 dtex, the properties of scraping off caked-on soils (denatured oil, baked substances, scale, etc.) are insufficient. Too thick thermoplastic fibers thicker than 150 dtex are difficult to make into uniform nonwoven fabric and also result in a high basis weight, which unfavorably increases the production cost. Where the thick thermoplastic fibers 2 have a fineness of 20 to 130 dtex, preferably 30 to 120 dtex, still preferably 40 to 110 dtex, the resulting sheet 1 shows particularly excellent properties of scraping off tenacious soils, for example, baked-on soils on cookware.

It is preferred for the cellulosic fibers 3 to have a fiber length of 0.1 to 15 mm for ease of forming a uniform web by an air-lay method. When a fiber web is prepared by a method other than an air-lay method, the fiber length of the cellulosic fibers 3 is not particularly limited. In using, as cellulosic fiber 3, wood pulp, which generally has a broad fiber length distribution, fibers having a length-weighted average fiber length of 1 to 4 mm are used suitably. A length-weighted average fiber length of wood pulp can be measured with, for example, a Kajaani fiber length analyzer and represented by the following equation:

$$\text{Length - Weighed Average Fiber Length} = \frac{\sum N_i (l_i)^2}{\sum N_i l_i}$$

wherein $l_i$ (i = 1 to 144) is an average length of fibers whose lengths are within a very narrow specific range ; and $N_i$ is the number of the fibers.

The fineness of the cellulosic fibers 3 is not particularly limited and is selected appropriately according to the kind of the fiber.

The content of the thick thermoplastic fibers 2 is 10 to 90% by weight, preferably 30 to 90% by weight. A thick thermoplastic fiber 2 content less than 10% by weight results in poor scraping properties due to a reduced amount of the thick thermoplastic fibers 2 present on the surface of the sheet 1. A content more than 90% by weight results in improved scraping properties but makes it difficult for the sheet 1 to be impregnated with an aqueous detergent and to absorb dirty liquid after scraping off dirt.

The content of the cellulosic fiber 3 in the cleaning sheet 1 is 10 to 90% by weight, preferably 10 to 70% by weight. A cellulosic fiber 3 content less than 10% by weight results in difficulty in infiltrating an aqueous detergent uniformly and reduction in dirty liquid absorptivity after scraping off dirt. If the content is more than 90% by weight, the proportion of the thick thermoplastic fiber is insufficient for securing scraping properties against caked-on soils.

The thick thermoplastic fiber 2 includes fibers of polyolefin resins such as polyethylene and polypropylene, polyester resins such as polyethylene terephthalate, acrylic resins such as polyacrylic acid and polymethacrylic acid, vinyl resins such as polyvinyl chloride, polyamide resins such as nylon, various metals and glass. In using resin fibers, the resin hardness is preferably in a range of from R40 to R150 in terms of Rockwell hardness. Resins having a Rockwell hardness of R80 to R150 are particularly preferred for securing scraping properties. Conjugate fibers, such as core/ sheath type or side-by-side type, made of two kinds selected from the above-recited resins are also useful. Preferred of the above-described fiber materials are acrylic fibers, polyester fibers, polyvinyl chloride fibers, polyamide fibers and polyolefin fibers for their excellent scraping properties without scratching an object to be cleaned, such as stainless steel, tiles, enamel and artificial marble. For preventing fall-off from the sheet 1, it is suitable to use heat-fusible conjugate fibers composed of a low-melting resin and a high-melting resin, the low-melting resin forming at least a part of the fiber surface. Examples of suitable combinations of low-melting resin/high-melting resin are high density polyethylene/polypropylene, low density polyethylene/polypropylene, polypropylene/ethylene-butene-1 crystalline copolymer, high density polyethylene/polyethylene terephthalate, nylon-6/nylon-66, low-melting polyester/polyethylene terephthalate, and polypropylene/polyethylene terephthalate.

The configurations of the heat-fusible conjugate fibers include a side-by-side structure, a concentric core/sheath structure, an eccentric core/sheath structure, a multilayer structure having three or more layers, a hollow side-by-side structure, a sectional core/sheath structure, and an islands-in-sea structure, in which a low-melting resin forms at least a part of the fiber surface. Preferred of the heat-fusible conjugate fibers are side-by-side, concentric core/sheath or eccentric core/sheath type conjugate fibers composed of at least one thermoplastic resin selected from high density polyethylene, linear low density polyethylene, an ethylene-butylene-1 crystalline copolymer, and a low-melting polyester, e.g., a copolyester of polyethylene terephthalate and polyethylene isophthalate, as a low-melting resin , and polypropylene or polyethylene terephthalate as a high-melting resin. Conjugate fiber composed of a low-melting polyester and polyethylene terephthalate is particularly preferred for obtaining excellent scraping properties.

Crimping fiber is also used as thick thermoplastic fiber 2 to improve bulkiness and thereby the feel on use of the cleaning sheet 1. Any crimping form, such as a spiral form, a zig-zag form, and a U-form, can be used suitably.

Two or more kinds of thick thermoplastic fibers 2 can be used in combination. In such a case, two or more kinds of thick thermoplastic fibers of which the lengths and the finenesses fall within the above-described respective ranges are used in a total amount within the above-specified thick thermoplastic resin content.

The cellulosic fiber 3 includes wood pulp fiber, flax fiber, cotton fiber, and regenerated fibers such as rayon. In particular, soft wood pulp fiber or cotton or rayon fiber having a fiber length of about 0.1 to 15 mm hardly falls off and exhibits adequate sheet strength.

Two or more kinds of the cellulosic fibers can be used in combination in a total amount within the above-specified cellulose fiber content.

The thick thermoplastic fibers 2 and the cellulosic fibers 3 are present in the cleaning sheet 1 in a uniformly mixed state. A large number of the tips of the thick thermoplastic fibers 2 are present on the cleaning surface of the cleaning sheet 1, with which soils can be scoured or scraped off effectively.

As stated above, a large number of the tips of the thick thermoplastic fibers 2 are present on the cleaning surface of the cleaning sheet 1. The number of the tips of the thick thermoplastic fibers 2 exposed on the cleaning surface is such that the sheet 1 exhibits sufficient scouring or scraping properties against dirt on a soiled surface. Specifically, the number is preferably 20 to $4000/cm^2$, still preferably 50 to $2000/cm^2$, particularly preferably 100 to $1000/cm^2$, especially preferably 120 to $600/cm^2$.

The number of the tips of the thick thermoplastic fibers 2 present on the surface of the cleaning sheet 1 is defined as follows. The term "(cleaning) surface" of the cleaning sheet 1 is intended to include any surface that is contributory to scraping soils when the surface of an object to be cleaned is wiped with the sheet I under a strong force. Therefore, the number of the tips of the thick thermoplastic fibers 2 present on one side of the cleaning sheet 1 is defined to be the total number of the thick thermoplastic fibers 2. Accordingly, the number of the tips of the thick thermoplastic fibers 2 is obtained from the weight s (g) of a single thick thermoplastic fiber 2 and the total weight w (g/cm$^2$) of the thick thermoplastic fibers 2 per unit area of the sheet 1, i.e., w/s.

It is preferred for the cleaning sheet 1 to further comprise heat-fusible fiber having a fineness of about 0.5 to 5 dtex, relatively thinner than the thick thermoplastic fibers 2, in addition to the thick thermoplastic fiber 2 and the cellulosic fiber 3. Presence of such heat-fusible fiber is effective in preventing the thick thermoplastic fibers 2 from falling off and in improving scraping properties. From this viewpoint, it is desirable that the heat-fusible fibers be thermally bonded among themselves and also with the thick thermoplastic fibers 2 at the intersections. A preferred content of the heat-fusible fiber in the cleaning sheet 1 is 1 to 50% by weight, particularly 2 to 30% by weight.

The cleaning sheet 1 is formed by accumulating the thick thermoplastic fibers 2 and the cellulosic fibers 3 into a web by an air-lay method and bonding the fibers constituting the air-laid web at their intersections. Bonding the fibers is suitably achieved by fusion or with a binder. Useful binders include acrylonitrile-butadiene rubber, styrene-butadiene rubber, polyvinyl acetate, an ethylene-vinyl acetate copolymer, and polyacrylate. The cleaning sheet 1 formed by an air-lay method can have the thick thermoplastic fibers 2 randomly oriented in three dimensions so that a great number of the tips of the thick thermoplastic fibers 2 may be exposed on the surface of the sheet 1. Having the above-specified fiber length, the thick thermoplastic fibers 2 are readily oriented in the sheet thickness direction to develop scraping properties. The above-specified fineness of the thick thermoplastic fibers 2 secures their stiffness to develop scouring or scraping properties.

From the viewpoint of convenience in wiping with the cleaning sheet 1 by hand, it is preferred for the cleaning sheet 1 to have an uneven pattern formed by embossing. Where heat-fusible fiber is used in combination, heat embossing or ultrasonic embossing to make an uneven pattern is preferred not only from the same viewpoint but for improving the sheet strength.

The cleaning sheet 1 according to the first embodiment is useful to remove caked-on soils, such as denatured oil, baked substances or scale which are sticking to stoves (cookers), countertops, cookware, sinks, etc. in a kitchen and sebum, scale, dust and soap scum which are sticking to tiles, a tub, etc. in a bathroom. It is especially suited for cleaning a kitchen. Since the cleaning sheet 1 according to the first embodiment shown in Fig. 1 has a great number of tips of the thick thermoplastic fibers 2 exposed on both sides thereof, each side can serve as a cleaning surface.

The cleaning sheet 1 can be used either as a dry sheet free of liquid or a wet sheet impregnated or sprayed with liquid such as an aqueous detergent. It is especially effective to use the cleaning sheet 1 as impregnated or sprayed with liquid such as an aqueous detergent. Comprising hydrophilic cellulosic fibers 2 in a specified amount, the cleaning sheet 1 is capable of holding an adequate amount of an aqueous detergent for cleaning. When a soiled surface of an object is wiped with the cleaning sheet 1 impregnated with an aqueous detergent, the soils are swollen with or partly dissolved in the aqueous detergent so that the mechanical cleaning performance by scouring or scraping with the cleaning sheet is boosted. The cleaning sheet 1 may be supplied on the market as previously impregnated with an aqueous detergent or be sprayed with an aqueous detergent by an user on use.

The mechanism of soil removal with the cleaning sheet 1 according to the first embodiment is explained hereunder taking the aqueous detergent-impregnated wet cleaning sheet as an example. When either side of the cleaning sheet 1 is applied to a soiled surface and rubbed, the aqueous detergent in the sheet 1 is applied to the soiled surface to swell, dissolve or float the soils. At the same time, a large number of the tips of the thick thermoplastic fibers 2 present on the cleaning surface of the sheet 1 scour or scrape off the soils. The soils are removed through these chemical and mechanical actions. The dirt thus caught up is dissolved or dispersed in the aqueous detergent and absorbed by the sheet 1 together with the cleaner to make the surface clean.

The aqueous detergent which can be infiltrated into the cleaning sheet 1 or be used in combination with the sheet 1 comprises water as a medium and preferably contains a surface active agent, an alkali agent, an electrolyte and a water-soluble solvent. Incorporation of an antimicrobial agent into the aqueous detergent is preferred. The content of non-volatile residues in the aqueous detergent is preferably not more than 10% by weight, particularly 5% by weight or less, for giving a satisfactory cleaning finish.

The surface active agent which can be used in the aqueous detergent includes anionic surface active agents, nonionic surface active agents, cationic surface active agent and amphoteric surface active agents. From the standpoint of cleaning action and finish, preferred surface active agents include nonionc ones, such as polyoxyalkylene (mole number of alkylene oxide units added: 1 to 20) alkyl (straight-chain or branched, containing 8 to 22 carbon atoms) ethers, alkyl (straight-chain or branched, containing 8 to 22 carbon atoms) glycosides (average sugar condensation degree: 1 to 5), sorbitan fatty acid (straight-chain or branched, containing 8 to 22 carbon atoms) esters, and alkyl (straight-chain or branched, containing 6 to 22 carbon atoms) glycerol ethers and amphoteric ones containing 8 to 24 carbon atoms, such as alkylcarboxybetaines, alkylsulfobetaines, alkylhydroxysulfobetaines, alkylamidocarboxybetaines, alkylamidosulfobetaines, and alkylamidohydroxysulfobetaines. The surface active agent is preferably used in an amount of 0.01 to 2.0% by weight, particularly 0.05 to 1.0% by weight, based on the aqueous detergent in view of detergency and cleaning finish.

The alkali agent which can be used includes hydroxides such as sodium hydroxide, carbonates such as sodium carbonate and potassium carbonate, alkaline sulfates such as sodium hydrogensulfate, phosphates such as sodium primary phosphate, organic alkali metal salts such as sodium acetate and sodium succinate, ammonia, alkanolamines such as mono-, di- or triethanolamine, β-aminoalkanols such as 2-amino-2-methyl-1-propanol, and morpholine. Alkanolamines such as mono-, di- or triethanolamine, β-aminoalkanols such as 2-amino-2-methyl-1-propanol, and morpholine are particularly preferred for the feel and pH buffering action. The alkali agent is used in an amount of 1% by weight or less, particularly 0.5% by weight or less, based on the aqueous detergent for preventing sliminess and improving the feel. Since an alkali agent is sometimes apt to swell oily soils to make the surface to be cleaned slippery, the content in the aqueous detergent is preferably as small as is consistent with a desired effect and may be zero.

The electrolyte which can be added to the aqueous detergent includes water-soluble salts of monovalent metals, such as sodium chloride, potassium chloride and sodium sulfate; water-soluble salts of divalent metals, such as magnesium sulfate, calcium chloride and zinc sulfate; water-soluble salts of trivalent metals, such as aluminum chloride and iron chloride; and water-soluble organic acid salts, such as sodium citrate, sodium succinate, sodium tartrate, sodium lactate, and sodium fumarate. The electrolyte is preferably added in an amount of 0.01 to 10% by weight, particularly 0.04 to 5% by weight, especially 0.08 to 3% by weight, based on the aqueous detergent to improve the scraping properties and finish after cleaning.

The water-soluble solvent which can be used in the aqueous detergent includes monohydric alcohols, polyhydric alcohols, and their derivatives. From the standpoint of oily soil dissolving properties, finish, and safety, preferred of them are ethanol, isopropyl alcohol, propanol, ethylene glycol monomethyl ether, propylene glycol monomethyl ether, propylene glycol, butanediol, 3-methyl-1,3-butanediol, hexylene glycol and glycerol. Particularly, from the standpoint of providing antimicrobial performance with the detergent, preferred of them are ethanol, isopropyl alcohol and propanol. The water-soluble solvent is preferably used in an amount of 1 to 50% by weight, particularly 1 to 20% by weight, based on the aqueous detergent in view of smell and reduction in skin irritation.

The aqueous detergent can further contain an antimicrobial agent to impart an antimicrobial effect to the aqueous detergent in addition to the detergency. Useful antimicrobial agents include hydrogen peroxide, hypochloric acid, sodium hypochlorite, quaternary ammonium salts, sodium benzoate, sodium p-hydroxybenzote, and naturally occurring antimicrobials such as polylysine. Quaternary ammonium salts, sodium benzoate and polylysine are preferred for their compounding stability and antimicrobial activity. The antimicrobial agent is preferably added in an amount of 0.005 to 2% by weight, particularly 0.01 to 1% by weight, based on the aqueous detergent, taking into consideration the balance of antimicrobial effect and reduction in skin irritation.

If desired, the aqueous detergent can contain e.g. perfumes, fungicides, colorants (dyes or pigments), chelating agents, abrasives and bleaching agents.

The content of water, the medium, in the aqueous detergent, is preferably 50 to 99.9% by weight, particularly 80 to 99% by weight, in view of detergency and finish.

The amount of the aqueous detergent to be infiltrated into the cleaning sheet 1 is preferably 50 to 1000% by weight, particularly 100 to 500% by weight, based on the dry weight of the cleaning sheet 1 in terms of performance in removing caked-on soils, such as denatured oil, baked substances, and scale in a kitchen, and sebum, scale, soap scum, dust in a bathroom.

A second embodiment of the present invention will be illustrated with reference to Fig. 2. The second embodiment will be described in terms of differences from the first one. Otherwise the description about the first embodiment applies appropriately. In fig. 2 the same members are given the same numerals as used in Fig. 1.

The cleaning sheet 1 shown in Fig. 2 is a double layered unitary laminate composed of a liquid retentive sheet 4 comprising cellulosic fiber 3 and an air-laid nonwoven fabric 5 comprising thick thermoplastic fiber 2. The air-laid nonwoven fabric 5 serves as a cleaning surface as hereinafter described. The liquid retentive sheet 4 functions as a retentive carrier for an aqueous detergent when the cleaning sheet 1 is used as a wet sheet. The cleaning sheet 1 according to the second embodiment having a double layered structure, the cleaning function and the aqueous detergent holding function are performed by separate members. On the other hand, the cleaning sheet according to the first embodiment has a single layer structure serving both as a cleaning surface and an aqueous detergent holding member.

The thick thermoplastic fibers 2 constituting the air-laid nonwoven fabric 5 have the same length and fineness and are of the same material as used in the first embodiment.

The thick thermoplastic fiber 2 content in the air-laid nonwoven fabric 5 preferably ranges 30 to 100% by weight, particularly 50 to 100% by weight, to ensure capability of removing caked-on soils, such as denatured oil, baked substances and scale in a kitchen, and sebum, scale, soap scum, dust in a bathroom. Other fibers which constitute the air-laid nonwoven fabric 5 in addition to the thick thermoplastic fiber 2 include thermoplastic fibers having a fineness of 0.5 to 5 dtex, particularly 1 to 3 dtex, and a fiber length of 2 to 15 mm, particularly 3 to 8 mm (hereinafter referred to as thin thermoplastic fibers). The content of the thin thermoplastic fibers in the air-laid nonwoven fabric 5 is preferably 1 to 50% by weight, particularly 5 to 30% by weight. The combined use of such thin thermoplastic fibers with the thick thermoplastic fibers 2 is preferred for decreasing the basis weight of the cleaning sheet 1 while retaining the scouring or scraping properties.

Where the thick thermoplastic fiber 2 is heat-fusible, such heat-fusible thick thermoplastic fiber 2 can be used in combination with heat-fusible thin thermoplastic fiber having a fineness of 0.5 to 5 dtex, particularly 1 to 3 dtex, and a length of 2 to 15 mm, particularly 3 to 8 mm. In order to prevent the thick thermoplastic fiber from falling off and to improve the scraping properties, the heat-fusible thin thermoplastic fiber is preferably used in a proportion of 1 to 50% by weight, particularly 5 to 30% by weight. Crimping thin thermoplastic fiber which is capable of crimping in the form of a spiral, a zig-zag, a U-shape, etc. is preferably used to improve the bulkiness and thereby the feel on use of the cleaning sheet 1.

The air-laid nonwoven fabric 5 preferably has a basis weight of 30 to 200 $g/m^2$, particularly 50 to 150 $g/m^2$, to secure capability of removing caked-on soils in a kitchen or a bathroom.

There exist a great number of the tips of the thick thermoplastic fibers 2 on the surface of the air-laid nonwoven fabric in nature of the air-lay method. In the second embodiment, it is this surface that serves as a cleaning surface of the cleaning sheet 1, with which soils can be scoured or scraped off from a soiled surface.

The fiber length of the cellulosic fibers 3 constituting the liquid retentive sheet 4 is selected appropriately according to the sheet forming method. Where the liquid retentive sheet 4 is formed by wet papermaking, for example, it is preferred for the cellulosic fibers 3 to have a length of 0.1 to 20 mm, particularly 0.2 to 15 mm. Where the sheet 4 is formed by spun lacing or thermal bonding, the fiber length of the cellulosic fibers 3 is preferably 30 to 100 mm, particularly 35 to 65 mm. Where the sheet 4 is formed by air laying, the fiber length is preferably 0.1 to 15 mm, particularly 0.3 to 10 mm. Examples of the cellulosic fibers 3 are the same as those enumerated for the first embodiment.

The cellulosic fiber 3 content in the liquid retentive sheet 4 preferably ranges 30 to 100% by weight, particularly 50 to 100% by weight, to ensure capability of retaining a liquid detergent and absorbing a dirty liquid. The liquid retentive sheet 4 is constituted of cellulosic fibers 3 and heat-fusible fibers having a fineness of 0.5 to 5 dtex, particularly 1 to 3 dtex, and a length of 2 to 15 mm, particularly 3 to 8 mm and optionally other fibers. The heat-fusible fiber is preferably used in a proportion of 5 to 70% by weight, particularly 10 to 50% by weight, in the liquid retentive sheet 4. Where, in particular, the air-laid nonwoven fabric 5 contains heat-fusible fiber or heat-fusible powder, it is preferred to use the heat-fusible fiber as a constituent of the liquid retentive sheet 4 to ensure bonding between the air-laid nonwoven fabric 5 and the liquid retentive sheet 4. Useful heat-fusible fibers include low-melting polyolefin fibers, polyester fibers, the above-described conjugate fibers composed of a low-melting resin and a high-melting resin, the low-melting resin forming at least part of the fiber surface.

The cleaning sheet 1 according to the second embodiment comprises 10 to 90% by weight, preferably 20 to 80% by weight, of the thick thermoplastic fibers and 10 to 90% by weight, preferably 20 to 80% by weight, of the cellulosic fibers. These contents and the preference are based on the same reasons as described previously.

The cleaning sheet 1 of the second embodiment can be prepared, for example, according to the following methods (1) to (3).

(1) A web comprising the cellulosic fibers 3 having a fiber length of 0.1 to 15 mm is formed by an air-lay method, and the constituent fibers are bonded by fusion or with a binder at their intersections to form a liquid retentive sheet 4. Separately, a web comprising the thick thermoplastic fibers 2 is formed by an air-lay method, and the constituent fibers are bonded by fusion or with a binder at their intersections to form an air-laid nonwoven fabric 5. The air-laid nonwoven fabric 5 is superposed on one side of the liquid retentive sheet 4, and the two layers are united into one body by, for example, fusion bonding by heat embossing or ultrasonic embossing or with a hot-melt adhesive.

(2) A web comprising the cellulosic fibers 3 having a fiber length of 0.1 to 15 mm is formed by an air-lay method, and the constituent fibers are bonded by fusion or with a binder at their intersections to form a liquid retentive sheet 4. An air-laid web comprising the thick thermoplastic fibers 2 is superposed on one side of the liquid retentive sheet 4. The fibers constituting the web are bonded by fusion or with a binder at their intersections to make the web into an air-laid nonwoven fabric 5 and, at the same time, the two layers are bonded together into one body by fusion or with a binder. Fusion by heat embossing or ultrasonic embossing is effective to secure firm bonding of the two layers.

(3) An air-laid web comprising the thick thermoplastic fibers 2 is superposed on one side of an air-laid web comprising the cellulosic fibers 3 having a fiber length of 0.1 to 15 mm. The fibers constituting each web are bonded among themselves at their intersections by fusion or with a binder and, at the same time, the two webs were bonded together by fusion or with a binder thereby to form a liquid retentive sheet 4 and an air-laid nonwoven fabric 5 which are united into one body. The means for uniting is the same as in the methods (1) and (2).

Fig. 3 schematically illustrates the cleaning sheet 1 of laminate type prepared by any of the above described methods which has been heat-embossed in a rhombic lattice pattern to form a large number of straight depressions 6 while raising diamond-shaped areas 7 surrounded by the depressions 6. The depressed areas 6 are made denser by heat and pressure application of embossing than the raised areas 7. The pattern of the depressions 6 is not limited to the lattice as shown and includes stripes, dots and other arbitrary designs. For obtaining both the surface strength withstanding a cleaning operation and the cleaning performance, the total area ratio of the depressions 6 is preferably 5 to 50%, particularly 10 to 40%, based on the cleaning surface area of the cleaning sheet 1.

Similarly to the first embodiment, the cleaning sheet 1 according to the second embodiment can be used as either a dry sheet or a wet sheet.

The mechanism of soil removal with the cleaning sheet 1 according to the second embodiment is almost the same as in the case of the first embodiment. The air-laid nonwoven fabric 5 side of the cleaning sheet 1 is applied to a soiled surface and rubbed to supply an aqueous detergent held in the liquid retentive sheet 4 to the soiled surface through the air-laid nonwoven fabric 5. The soils on the soiled surface are swollen, dissolved or floated by the detergent and, at the same time, scoured or scraped by a large number of the tips of the thick thermoplastic fibers 2 present on the air-laid nonwoven fabric 5. The soils are thus removed from the soiled surface through these chemical and mechanical actions. The soils thus caught up are dissolved or dispersed in the aqueous detergent and absorbed by the liquid retentive sheet 4 together with the detergent to make the surface clean.

The present invention is not limited to the above-described embodiments. For instance, the cleaning sheet of the second embodiment may have the air-laid nonwoven fabric 5 on both sides of the liquid retentive sheet 4, in which case both sides of the cleaning sheet avail for cleaning.

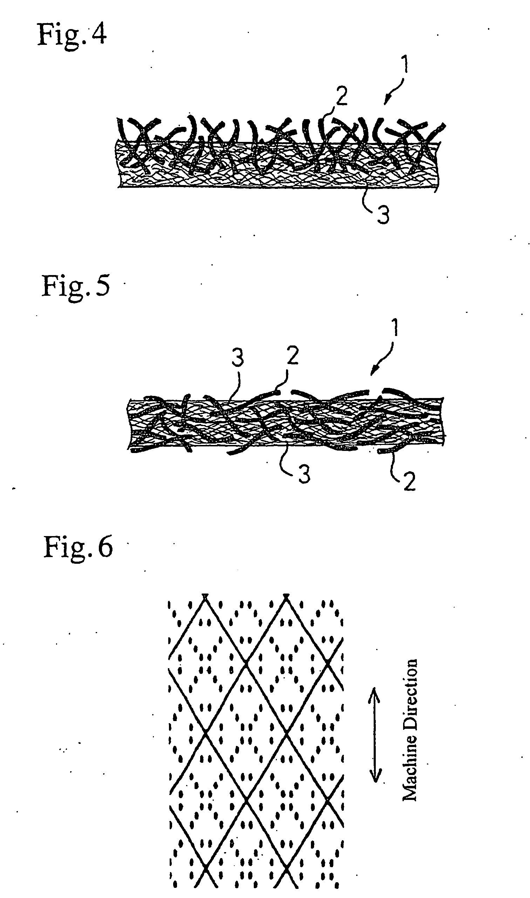

In the cleaning sheet of the first embodiment, the thick thermoplastic fibers may be distributed with a gradient in the thickness direction by appropriately controlling the air-lay conditions. For example, as shown in Fig. 4, the cleaning sheet 1 can have the thick thermoplastic fibers in a larger amount in one side thereof than in the other side. In this case, it is preferred that the side having a larger amount of the thick thermoplastic fibers be used as a cleaning surface.

It is possible to produce the cleaning sheet 1 according to any of the above-described embodiments by a wet papermaking technique. For example, the cleaning sheet of the first embodiment can be produced as follows. A paper stock comprising heat-fusible thick thermoplastic fiber, cellulosic fiber (e.g., pulp), and a prescribed amount of a wet strength agent (e.g., a polyamide-epichlorohydrin resin) is made into a web by papermaking and dried in a drier where the thick thermoplastic fibers are fusion-bonded together at their intersections. In using high-melting thick thermoplastic fiber, a binder can be added to the stock in the same manner as in an air-lay method to provide a high-strength cleaning sheet which is prevented from dropping the constituent fibers. A schematic cross-sectional view of the cleaning sheet of the first embodiment which is prepared by the papermaking technique is shown in Fig. 5. Compared with the structure built up by an air-lay method (see Fig. 1), the thick thermoplastic fibers tend to be oriented in the planar direction.

Where the cleaning sheet according to the second embodiment is prepared by the papermaking method, a sheet comprising the thick thermoplastic fiber and a sheet comprising the cellulosic fiber are prepared separately, and the two sheets are bonded together by heat embossing or adhesion with a hot-melt adhesive.

The present invention will now be illustrated in greater detail with reference to Examples. The following Examples are presented as being exemplary of the present invention and should not be construed as being limiting.

## EXAMPLE 1

(1) Pulp fiber (length-weighted average fiber length: 2.5 mm) as cellulosic fiber and (2) crimping low-melting conjugate fiber having a core/sheath structure composed of a polyethylene terephthalate core and a polyethylene sheath (fineness: 2.2 dtex; length: 5 mm; melting point of sheath: 130°C) as heat-fusible thermoplastic fiber were mixed at a weight ratio of 60/40, and the mixed fiber was air-laid into a web. The constituent fibers of the web were bonded at their intersections with a binder (acrylonitrile-butadiene rubber) to prepare a first air-laid nonwoven fabric (dry pulp sheet) having the basis weight shown in Table 2 below as a liquid retentive sheet.

Separately, crimping low-melting conjugate fiber having a core/sheath structure composed of a polypropylene core and a polyethylene sheath (fineness: 11 dtex; length: 5 mm; melting point of sheath: 130°C) as thick thermoplastic fiber was air-laid into a web having a basis weight of 50 g/m$^2$. The constituent fibers were heat-fusion bonded at their intersections to obtain a second air-laid nonwoven fabric, whose particulars are shown in Table 2.

The second air-laid nonwoven fabric was put on the first air-laid nonwoven fabric, and the two sheets were fusion-bonded by heat embossing to obtain a cleaning sheet having the basis weight shown in Table 2. The resulting cleaning sheet had the structure shown in Fig. 2, having a large number of the tips of the thick thermoplastic fibers exposed on the surface of the second air-laid nonwoven fabric. The embossed pattern was a combination of a lattice and dots as shown in Fig. 6. The area ratio of the depressions was 17%.

## EXAMPLE 2

A cleaning sheet having the basis weight shown in Table 2 was obtained in the same manner as in Example 1, except that the thick thermoplastic fiber of the second air-laid nonwoven fabric had a fineness of 20 dtex. The resulting cleaning sheet had the structure shown in Fig. 2, having a large number of the tips of the thick thermoplastic fibers exposed on the surface of the second air-laid nonwoven fabric.

## EXAMPLE 3

A cleaning sheet having the basis weight shown in Table 2 was obtained in the same manner as in Example 1, except for changing the fineness of the thick thermoplastic fiber of the second air-laid nonwoven fabric to 35 dtex and changing the basis weight of the second air-laid nonwoven fabric to 70 g/m². The resulting cleaning sheet had the structure shown in Fig. 2, having a large number of the tips of the thick thermoplastic fibers exposed on the surface of the second air-laid nonwoven fabric.

## EXAMPLE 4

A cleaning sheet having the basis weight shown in Table 2 was obtained in the same manner as in Example 1, except for using, as a material of the second air-laid nonwoven fabric, a 90/10 mixture of the same crimping core/sheath type conjugate fiber as used in Example 1 but having a fineness of 72 dtex (thick thermoplastic fiber) and the same crimping core/sheath type conjugate fiber as used in Example 1 but having a fineness of 1.7 dtex (thin thermoplastic fiber). The resulting cleaning sheet had the structure shown in Fig. 2, having a large number of the tips of the thick thermoplastic fibers exposed on the surface of the second air-laid nonwoven fabric.

## EXAMPLE 5

A cleaning sheet having the basis weight shown in Table 2 was obtained in the same manner as in Example 4, except that the second air-laid nonwoven fabric had a basis weight of 80 g/m². The resulting cleaning sheet had the structure shown in Fig. 2, having a large number of the tips of the thick thermoplastic fibers exposed on the surface of the second air-laid nonwoven fabric.

## EXAMPLE 6

A cleaning sheet having the basis weight shown in Table 2 was obtained in the same manner as in Example 1, except for using, as a material of the second air-laid nonwoven fabric, a 90/10 mixture of the same crimping core/sheath type conjugate fiber as used in Example 1 but having a fineness of 100 dtex (thick thermoplastic fiber) and the same crimping core/sheath type conjugate fiber as used in Example 1 but having a fineness of 1.7 dtex (thin thermoplastic fiber). The resulting cleaning sheet had the structure shown in Fig. 2, having a large number of the tips of the thick thermoplastic fibers exposed on the surface of the second air-laid nonwoven fabric.

## EXAMPLE 7

A cleaning sheet having the basis weight shown in Table 2 was obtained in the same manner as in Example 1, except for using, as a material of the second air-laid nonwoven fabric, a 50/50 mixture of nylon fiber having a fineness of 72 dtex (thick thermoplastic fiber) and the same crimping core/sheath type conjugate fiber as used in Example 1 but having a fineness of 1.7 dtex (thin thermoplastic fiber), bonding the fibers constituting the resulting web at their intersections by means of heat fusion and with a binder (acrylonitrile-butadiene rubber), and changing the basis weight of the second air-laid nonwoven fabric to 104 g/m². The resulting cleaning sheet had the structure shown in Fig. 2, having a large number of the tips of the thick thermoplastic fibers exposed on the surface of the second air-laid nonwoven fabric.

## EXAMPLE 8

A cleaning sheet having the basis weight shown in Table 2 was obtained in the same manner as in Example 7, except that the thick thermoplastic fiber in the second air-laid nonwoven fabric was acrylic fiber having a fineness of 33 dtex. The resulting cleaning sheet had the structure shown in Fig. 2, having a large number of the tips of the thick thermoplastic fibers exposed on the surface of the second air-laid nonwoven fabric.

**EXAMPLE 9**

A cleaning sheet having the basis weight shown in Table 2 was obtained in the same manner as in Example 1, except for using, as a material of the second air-laid nonwoven fabric, a 90/10 mixture of crimping core/sheath type conjugate fiber having a fineness of 72 dtex and composed of a polyester core and a polyethylene sheath (thick thermoplastic fiber) and the same crimping core/sheath type conjugate fiber as used in Example 1 but having a fineness of 1.7 dtex (thin thermoplastic fiber). The resulting cleaning sheet had the structure shown in Fig. 2, having a large number of the tips of the thick thermoplastic fibers exposed on the surface of the second air-laid nonwoven fabric.

**EXAMPLE 10**

A cleaning sheet having the basis weight shown in Table 2 was obtained in the same manner as in Example 9, except that the second air-laid nonwoven fabric had a basis weight of 50 g/m². The resulting cleaning sheet had the structure shown in Fig. 2, having a large number of the tips of the thick thermoplastic fibers exposed on the surface of the second air-laid nonwoven fabric.

**EXAMPLE 11**

A cleaning sheet having the basis weight shown in Table 2 was obtained in the same manner as in Example 1, except that a second air-laid nonwoven fabric having a basis weight of 80 g/m² was prepared from crimping core/sheath type conjugate fiber having a fineness of 22 dtex and composed of a polyethylene terephthalate core and a low-melting polyester sheath (thick thermoplastic fiber; melting point of sheath: 110°C). The resulting cleaning sheet had the structure shown in Fig. 2, having a large number of the tips of the thick thermoplastic fibers exposed on the surface of the second air-laid nonwoven fabric.

**EXAMPLE 12**

A cleaning sheet having the basis weight shown in Table 2 was obtained in the same manner as in Example 11, except for using, as a material of the second air-laid nonwoven fabric, a 75/25 mixture of crimping core/sheath type conjugate fiber composed of a polyethylene terephthalate core and a low-melting polyester sheath and having a fineness of 56 dtex (thick thermoplastic fiber; melting point of sheath: 110°C) and crimping core/sheath type conjugate fiber composed of a polyethylene terephthalate core and a low-melting polyester sheath and having a fineness of 2.2 dtex (thin thermoplastic fiber; melting point of sheath: 110°C). The resulting cleaning sheet had the structure shown in Fig. 2, having a large number of the tips of the thick thermoplastic fibers exposed on the surface of the second air-laid nonwoven fabric.

**EXAMPLE 13**

A cleaning sheet having the basis weight shown in Table 2 was obtained in the same manner as in Example 11, except for using, as a material of the second air-laid nonwoven fabric, a 30/70 mixture of crimping core/sheath type conjugate fiber composed of a polyethylene terephthalate core and a low-melting polyester sheath and having a fineness of 56 dtex (thick thermoplastic fiber; melting point of sheath: 110°C) and crimping core/sheath type conjugate fiber composed of a polyethylene terephthalate core and a low-melting polyester sheath and having a fineness of 22 dtex (thick thermoplastic fiber; melting point of sheath: 110°C). The resulting cleaning sheet had the structure shown in Fig. 2, having a large number of the tips of the thick thermoplastic fibers exposed on the surface of the second air-laid nonwoven fabric.

**COMPARATIVE EXAMPLE 1**

Two sheets of the first air-laid nonwoven fabric (dry pulp sheet) prepared in Example 1 were fusion-bonded together by heat embossing in the same manner as in Example 1 to obtain a cleaning sheet having the basis weight shown in Table 2.

**EXAMPLE 14** (Reference)

The same crimping core/sheath type conjugate fiber having a fineness of 72 dtex as used in Example 5 as thick thermoplastic fiber and pulp fiber (length-weighted average fiber length: 2.5 mm) as cellulosic fiber were mixed at a weight ratio of 70/30 and air-laid into a web having the basis weight shown in Table 3. The constituent fibers of the web were bonded at their intersections by fusion and with a binder (acrylonitrile-butadiene rubber) to prepare a cleaning sheet having the basis weight shown in Table 3. The resulting cleaning sheet had the structure shown in Fig. 4, having a large number of the tips of the thick thermoplastic fibers exposed on the surface thereof.

**EXAMPLE 15** (Reference)

The same acrylic fiber as used in Example 8 (fineness: 33 dtex) as thick thermoplastic fiber and pulp fiber (weighted average fiber length: 2.5 mm) as cellulosic fiber were mixed at a weight ratio of 70/30. The mixed fiber was mixed with 0.6% by weight of a wet strength agent (polyamide-epichlorohydrin), and the resulting stock was made into a sheet having a basis weight of 100 g/m$^2$ by a manual papermaking method. The constituent fibers were bonded at their intersections with a binder (acrylonitrile-butadiene rubber) to obtain a cleaning sheet having the basis weight shown in Table 3. The resulting cleaning sheet had the structure shown in Fig. 5, having a large number of the tips of the thick thermoplastic fibers exposed on its surface.

**COMPARATIVE EXAMPLE 2**

Crimping core/sheath type conjugate fiber composed of a polyethylene terephthalate core and a low-melting polyester sheath (fineness: 2.2 dtex, length: 5 mm) and pulp fiber (length-weighted average length: 2.1 mm) as cellulosic fiber were mixed at a ratio of 10/90. The mixed fiber was mixed with 0.6% of a wet strength agent (polyamide-epichlorohydrin), and the resulting stock was made into paper having a basis weight of 30 g/m$^2$ by a conventional papermaking machine. Two sheets of the paper thus prepared were fusion-bonded together by heat embossing to obtain a cleaning sheet having the basis weight shown in Table 3.

**COMPARATIVE EXAMPLE 3**

A brush made of a metal (BONSTAR SOAP PAD available from NIHON STEEL WOOL) was used in comparative example 3

**COMPARATIVE EXAMPLE 4**

A sponge with abrasive particles (SCOTCH BRIGHT available from SUMITOMO 3M) was used in comparative example 4. This sponge has a surface made of nonwoven fabric with abrasive particles which surface serves as a cleaning surface.

Evaluation of performance:

The cleaning sheets prepared in the foregoing Examples and Comparative Examples were evaluated for performance in removing simulated caked-on soils (a), (b) and (c) prepared as follows. The evaluation was made in terms of soil removal ratio measured as follows. In addition, prevention of scratch was evaluated for the following method. The results obtained are shown in Tables 2 to 4.

1) Preparation of slightly denatured oil

Salad oil (0.06 g) was uniformly spread on a sandpapered iron plate (30 mm by 80 mm) and baked at 160°C for 30 minutes to make slightly denatured oil soil, the pencil hardness of which was 6B or softer (designated soil (a)).

2) Preparation of medium-denatured oil

Salad oil (0.06 g) was uniformly spread on a sandpapered iron plate (30 mm by 80 mm) and baked at 150°C for 130 minutes to make medium-denatured oil soil, the pencil hardness of which was 2B to 3B (designated soil (b)).

3) Preparation of burnt-on soil

A mixture (0.06 g) of sugar/soy sauce/*mirin* (sweet *sake* for cooking) in a weight ratio of 40/44/16 was uniformly spread on a SUS304 plate (30 mm by 80 mm) and baked at 180°C for 120 minutes to prepare burnt-on soil, the pencil hardness of which was 9H (designated soil (c)).

4) Measurement of soil removal ratio

The cleaning sheet was impregnated with 200% (based on the dry cleaning sheet) of an aqueous detergent having the formulation shown in Table 1. The soil prepared above was given 50 double strokes of rubbing with the cleaner-impregnated sheet by hand.

TABLE 1

| Formulation of aqueous detergent | |
|---|---|
| Water | 94.59% |
| Dodecyl glucoside (condensation degree: 1.4; surface active agent) | 0.2% |
| Alkylbenzylammonium chloride (antimicrobial agent) | 0.01% |
| Propylene glycol (water-soluble solvent) | 5% |
| Trisodium citrate (electrolyte) | 0.2% |

The weight of the test piece before being soiled (weight B) was subtracted from the weight of the soiled test piece (weight A) to obtain the weight of the soil attached. After being cleaned with the cleaning sheet, the test piece was lightly washed with water, dried, and weighed (weight C). The soil removal ratio (%) was calculated from equation:

$$\text{Soil removal ratio (\%)} = [(A - C)/(A - B)] \times 100$$

5) Prevention of scratch

The cleaning sheet was impregnated with 200% (based on the dry cleaning sheet) of an aqueous detergent having the formulation shown in Table 1 above. A stainless plate, an artificial marble plate and a fluorine resin plate (30mm x 80mm) were given 20 double strokes of rubbing respectively with the cleaner-impregnated sheet by hand. The degree of the prevention of scratch was evaluated for the following rank.

A: no scratch was observed
B: scratch was observed when lighted up
C: scratch was observed slightly
D: scratch was observed considerably

TABLE 2

| | Second Air-laid Nonwoven Fabric | | | | | | First Air-laid Nonwoven Fabric | | Cleaning Sheet | | | | | | |
| --- | --- | --- | --- | --- | --- | --- | --- | --- | --- | --- | --- | --- | --- | --- | --- |
| | Thick Thermoplastic Fiber | | | Thin Thermoplastic Fiber | | | Binder | Pulp/Heat-fusible Fiber (60/40) | Binder | Basis Weight (g/m$^2$) | Soil Removal Ratio (%) | | | Prevention of Scratch | | |
| | Length (mm) | Fineness (dtex) | Basis Weight (g/m$^2$) | Length (mm) | Fineness (dtex) | Basis Weight (g/m$^2$) | Basis Weight (g/m$^2$) | Basis Weight (g/m$^2$) | Basis Weight (g/m$^2$) | | Soil (a) | Soil (b) | Soil (c) | Stainless (SUS304) | Artificial Marble | Fluorine Resin |
| Example 1 | 5 | 11 | 50 | - | - | - | - | 70 | 10 | 130 | 86 | 9 | 27 | A | A | A |
| Example 2 | 5 | 20 | 50 | - | - | - | - | 70 | 10 | 130 | 85 | 10 | 37 | A | A | A |
| Example 3 | 5 | 35 | 70 | - | - | - | - | 70 | 10 | 150 | 88 | 28 | 50 | A | A | A |
| Example 4 | 5 | 72 | 45 | 5 | 1.7 | 5 | - | 70 | 10 | 130 | 91 | 58 | 87 | A | A | A |
| Example 5 | 5 | 72 | 72 | 5 | 1.7 | 8 | - | 70 | 10 | 160 | 92 | 88 | 92 | A | A | A |
| Example 6 | 5 | 100 | 45 | 5 | 1.7 | 5 | - | 70 | 10 | 130 | 88 | 38 | 60 | A | A | A |
| Example 7 | 5 | 72 | 40 | 5 | 1.7 | 40 | 24 | 70 | 10 | 184 | 90 | 40 | 67 | A | A | A |
| Example 8 | 5 | 33 | 40 | S | 1.7 | 40 | 24 | 70 | 10 | 184 | 93 | 87 | 94 | A | A | A |
| Example 9 | 5 | 72 | 72 | 5 | 1.7 | 8 | - | 70 | 10 | 160 | 96 | 95 | 95 | A | A | A |
| Example 10 | 5 | 72 | 45 | 5 | 1.7 | 5 | - | 70 | 10 | 130 | 95 | 88 | 90 | A | A | A |
| Example 11 | 5 | 22 | 80 | - | - | - | - | 70 | 10 | 160 | 97 | 100 | 100 | A | A | A |
| Example 12 | 5 | 56 | 60 | 5 | 2.2 | 20 | - | 70 | 10 | 160 | 99 | 100 | 100 | A | A | A |
| Example 13 | 5 | 22 (70%) 56 (30%) | 80 | - | - | - | - | 70 | 10 | 160 | 97 | 100 | 100 | A | A | A |

EP 1 211 342 B1

(continued)

| | Second Air-laid Nonwoven Fabric | | | | | | First Air-laid Nonwoven Fabric | | | Cleaning Sheet | | | | | |
|---|---|---|---|---|---|---|---|---|---|---|---|---|---|---|---|---|
| | Thick Thermoplastic Fiber | | | Thin Thermoplastic Fiber | | | Binder | Pulp/Heat-fusible Fiber (60/40) | Binder | Basis Weight (g/m$^2$) | Soil Removal Ratio (%) | | | Prevention of Scratch | | |
| | Length (mm) | Fineness (dtex) | Basis Weight (g/m$^2$) | Length (mm) | Fineness (dtex) | Basis Weight (g/m$^2$) | Basis Weight (g/m$^2$) | Basis Weight (g/m$^2$) | Basis Weight (g/m$^2$) | | Soil (a) | Soil (b) | Soil (c) | Stainless (SUS304) | Artificial Marble | Fluorine Resin |
| Comparative Example 1 | - | - | - | - | - | - | - | 140 | 20 | 160 | 40 | 4 | 23 | A | A | A |

TABLE 3

| | Thick Thermoplastic Fiber | | | Cellulosic Fiber | Binder | Cleaning Sheet | Soil Removal Ratio (%) | | | Prevention of Scratch | | |
|---|---|---|---|---|---|---|---|---|---|---|---|---|
| | Length (mm) | Fineness (dtex) | Basis Weight (g/m²) | Basis Weight (g/m²) | Basis Weight (g/m²) | Basis Weight (g/m²) | Soil (a) | Soil (b) | Soil (c) | Stainless (SUS304) | Artificial Marble | Fluorine Resin |
| Example 14* | 5 | 72 | 84 | 36 | 10 | 130 | 90 | 88 | 90 | A | A | A |
| Example 15* | 5 | 33 | 70 | 30 | 15 | 115 | 86 | 52 | 85 | A | A | A |
| Comparative Example 2 | 5 | 2.2 | 6 | 54 | - | 60 | 40 | 4 | 22 | A | A | A |
| *Reference Example | | | | | | | | | | | | |

TABLE 4

| | Soil Removal Ratio (%) | | | Prevention of Scratch | | |
|---|---|---|---|---|---|---|
| | Soil (a) | Soil (b) | Soil (c) | Stainless (SUS304) | Artificial Marble | Fluorine Resin |
| Comparative Example 3 | 99 | 100 | 100 | D | D | D |
| Comparative Example 4 | 100 | 100 | 100 | D | D | D |

The results in Tables 2 to 4 apparently prove that the cleaning sheets of Examples according to the present invention are excellent in scouring or scraping performance against various soils. In addition, the cleaning sheets of Examples which contains the specific thick thermoplastic fibers do not make a scratch on the surface to be cleaned.

As described and demonstrated above, the cleaning sheet of the present invention exhibits sufficient scouring or scraping properties against soils. In addition, the cleaning sheet of the present invention does not make a scratch on a surface to be cleaned, for example, in a kitchen and a bathroom, made of stainless, artificial marble, fluorine resin, tiles and enamel. In particular, a combined use with an aqueous detergent boosts the soil removal performance of the cleaning sheet. The cleaning sheet of the present invention is especially suited to removal of caked-on soils found in a kitchen, such as denatured oil, baked-on substances, and scale.

The invention being thus described, it will be obvious that the same may be varied in many ways. Such variations are not to be regarded as a departure from the spirit and scope of the invention, and all such modifications are would be obvious to one skilled in the art are intended to included within the scope of the following claims.

This application claims the priority of Japanese Patent Application Nos. 2000-367396 filed December 1, 2000 and 2001-182619 filed June 15, 2001.

## Claims

1. A cleaning sheet which is composed of a liquid retentive sheet and an air-laid nonwoven fabric on at least one side of said liquid retentive sheet, said liquid retentive sheet and said air-laid nonwoven fabric being laminated together into one body,
said liquid retentive sheet is constituted of cellulosic fibers and heat-fusible fibers having a fiber length of 2 to 15 mm and a fineness of 0.5 to 5 dtex,
said air-laid nonwoven fabric being obtained by forming an air-laid web containing thick thermoplastic fibers having a fiber length of 2 to 15 mm and a fineness of 10 to 150 dtex at an amount of 30 to 100% by weight and then bonding the thick thermoplastic fibers constituting said web by fusion or with a binder at their intersections,
said cleaning sheet containing 10 to 90% by weight of said thermoplastic fibers and 10 to 90% by weight of said cellulosic fibers,
said cleaning sheet having a large number of tips of said thick thermoplastic fibers exposed on the surface of said cleaning sheet to have the capability of scouring or scraping dirt off present on a soiled surface.

2. The cleaning sheet according to claim 1, wherein said cellulosic fibers have a fiber length of 0.1 to 15 mm.

3. The cleaning sheet according to any one of claims 1 or 2, wherein said liquid retentive sheet contains 30 to 100% by weight of said cellulosic fibers and has a basis weight of 30 to 200 $g/m^2$, and
said air-laid nonwoven fabric has a basis weight of 30 to 200 $g/m^2$.

4. The cleaning sheet according to any one of claims 1 to 3, which has been embossed.

5. The cleaning sheet according to any one of claims 1 to 4, wherein said thermoplastic fibers comprise a low-melting resin and a high-melting resin, said low-melting resin forming at least a part of the fiber surface.

6. The cleaning sheet according to any one of claims 1 to 5, wherein said thermoplastic fibers are crimped fibers.

7. The cleaning sheet according to claim 1, which is impregnated with an aqueous detergent.

8. The cleaning sheet according to claim 7, wherein said aqueous detergent contains an electrolyte.

9. Use of a cleaning sheet according to any one of claims 1 to 8 for cleaning a soiled surface which comprises spraying the cleaning sheet with an aqueous detergent and then rubbing the soiled surface with the sprayed cleaning sheet.

10. A process for manufacturing a cleaning sheet which is composed of a liquid retentive sheet and an air-laid nonwoven fabric on at least one side of said liquid retentive sheet, comprising laminating said liquid retentive sheet and said air-laid nonwoven fabric together into one body,
wherein said liquid retentive sheet is constituted of cellulosic fibers and heat-fusible fibers having a fiber length of 2 to 15 mm and a fineness of 0.5 to 5 dtex,
the process further comprising forming an air-laid web containing thick thermoplastic fibers having a fiber length of 2 to 15 mm and fineness of 10 to 150 dtex at an amount of 30 to 100% by weight, and then bonding the thick thermoplastic fibers constituting said web by fusion or with a binder at their intersections to obtain said air-laid nonwoven fabric,
and wherein said cleaning sheet contains 10 to 90% by weight of said thermoplastic fibers and 10 to 90% by weight cellulosic fibers,
said cleaning sheet having a large number of tips of said thick thermoplastic fibers exposed on the surface of said cleaning sheet.

11. The process according to claim 10, wherein separately from said liquid retentive sheet, said air-laid nonwoven fabric is obtained by forming an air-laid web comprising said thick thermoplastic fibers and thin thermoplastic fibers having a fiber length of 2 to 15 mm and a fineness of 0.5 to 5 dtex and then bonding the fibers constituting said web by fusion or with a binder at their intersections.

12. The process according to claim 10, comprising forming an air-laid web comprising said cellulosic fibers that have a fiber length of 0.1 to 15 mm and bonding the fibers constituting said web at their intersections by fusion or with a binder to prepare said sheet,
separately forming an air-laid web comprising said thermoplastic fibers and bonding the fibers constituting said web at their intersections by fusion or with a binder to prepare said air-laid nonwoven fabric, and
bonding said air-laid nonwoven fabric to at least one side of said sheet.

13. The process according to claim 10, comprising superposing an air-laid web comprising said thermoplastic fibers on at least one side of an air-laid web comprising said cellulosic fibers that have a fiber length of 0.1 to 15 mm and bonding the fibers constituting each of said webs among themselves at their intersections to form said liquid retentive sheet and said air-laid nonwoven fabric and also bonding said webs to each other by fusion or with a binder to laminate said liquid retentive sheet and said air-laid nonwoven fabric into one body.

**Patentansprüche**

1. Ein Reinigungstuch, das aus einem Flüssigkeit zurückhaltenden Tuch und einem luftgelegten Vliesstoff auf mindestens einer Seite des Flüssigkeit zurückhaltenden Tuchs zusammengesetzt ist, wobei das Flüssigkeit zurückhaltende Tuch und der luftgelegte Vliesstoff zusammen zu einem Körper laminiert sind,
wobei das Flüssigkeit zurückhaltende Tuch aus Zellulosefasern und heißschmelzbaren Fasern mit einer Faserlänge von 2 bis 15 mm und einer Feinheit von 0,5 bis 5 dtex besteht,
wobei der luftgelegte Vliesstoff durch Bilden eines luftgelegten Gespinsts, das dicke thermoplastische Fasern mit einer Faserlänge von 2 bis 15 mm und einer Feinheit von 10 bis 150 dtex in einer Menge von 30 bis 100 Gew.-% enthält, und daraufhin Verbinden der dicken thermoplastischen Fasern, aus denen das Gespinst besteht, an deren Kreuzungspunkten durch Verschmelzen oder mit einem Bindemittel erhalten wird, wobei das Reinigungstuch 10 bis 90 Gew.-% der thermoplastischen Fasern und 10 bis 90 Gew.-% der Zellulosefasern enthält,
wobei bei dem Reinigungstuch eine große Anzahl an Enden der dicken thermoplastischen Fasern an der Oberfläche des Reinigungstuchs freiliegen, um die Fähigkeit aufzuweisen, Schmutz, der auf einer verschmutzten Oberfläche vorhanden ist, abzuscheuern oder abzukratzen.

2. Das Reinigungstuch gemäß Anspruch 1, wobei die Zellulosefasern eine Faserlänge von 0,1 bis 15 mm aufweisen.

3. Das Reinigungstuch gemäß einem der Ansprüche 1 oder 2, wobei das Flüssigkeit zurückhaltende Tuch 30 bis 100 Gew.% der Zellulosefasern enthält und ein Flächengewicht von 30 bis 200 g/m$^2$ aufweist, und wobei der luftgelegte Vliesstoff ein Flächengewicht von 30 bis 200 g/m$^2$ aufweist.

4. Das Reinigungstuch gemäß einem der Ansprüche 1 bis 3, welches geprägt worden ist.

5. Das Reinigungstuch gemäß einem der Ansprüche 1 bis 4, wobei die thermoplastischen Fasern ein Harz mit niedrigem Schmelzpunkt und ein Harz mit hohem Schmelzpunkt umfassen, wobei das Harz mit niedrigem Schmelzpunkt mindestens einen Teil der Oberfläche der Fasern bildet.

6. Das Reinigungstuch gemäß einem der Ansprüche 1 bis 5, wobei die thermoplastischen Fasern gekräuselte Fasern sind.

7. Das Reinigungstuch gemäß Anspruch 1, welches mit einem wässrigen Detergens imprägniert ist.

8. Das Reinigungstuch gemäß Anspruch 7, wobei das wässrige Detergens einen Elektrolyten enthält.

9. Verwendung eines Reinigungstuchs gemäß einem der Ansprüche 1 bis 8 zum Reinigen einer verschmutzten Oberfläche, umfassend das Besprühen des Reinigungstuchs mit einem wässrigen Detergens, und daraufhin Reiben der verschmutzten Oberfläche mit dem besprühten Reinigungstuch.

10. Ein Verfahren zur Herstellung eines Reinigungstuchs, das zusammengesetzt ist aus einem Flüssigkeit zurückhaltenden Tuch und einem luftgelegten Vliesstoff auf mindestens einer Seite des Flüssigkeit zurückhaltenden Tuchs, umfassend das zusammen Laminieren des Flüssigkeit zurückhaltenden Tuchs und des luftgelegten Vliesstoffs zu einem Körper,
wobei das Flüssigkeit zurückhaltende Tuch aus Zellulosefasern und heißschmelzbaren Fasern mit einer Faserlänge von 2 bis 15 mm und einer Feinheit von 0,5 bis 5 dtex besteht,
wobei das Verfahren des Weiteren das Bilden eines luftgelegten Gespinsts, das dicke thermoplastische Fasern mit einer Faserlänge von 2 bis 15 mm und einer Feinheit von 10 bis 150 dtex in einer Menge von 30 bis 100 Gew.-% enthält, und daraufhin Verbinden der dicken thermoplastischen Fasern, aus denen das Gespinst besteht, an deren Kreuzungspunkten durch Verschmelzen oder mit einem Bindemittel, umfasst, um den luftgelegten Vliesstoff zu erhalten,
und wobei das Reinigungstuch 10 bis 90 Gew.-% der thermoplastischen Fasern und 10 bis 90 Gew.-% der Zellulosefasern enthält,
wobei bei dem Reinigungstuch eine große Anzahl an Enden der dicken thermoplastischen Fasern an der Oberfläche des Reinigungstuchs frei liegen.

11. Das Verfahren gemäß Anspruch 10, wobei getrennt von dem Flüssigkeit zurückhaltenden Tuch der luftgelegte Vliesstoff durch Bilden eines luftgelegten Gespinsts, das die dicken thermoplastischen Fasern und dünne thermoplastische Fasern mit einer Faserlänge von 2 bis 15 mm und einer Feinheit von 0,5 bis 5 dtex umfasst, und daraufhin Verbinden der Fasern, aus denen das Gespinst besteht, an deren Kreuzungspunkten durch Verschmelzen oder mit einem Bindemittel, erhalten wird.

12. Das Verfahren gemäß Anspruch 10, umfassend das Bilden eines luftgelegten Gespinsts, das die Zellulosefasern mit einer Faserlänge von 0,1 bis 15 mm umfasst, und das Verbinden der Fasern, aus denen das Gespinst besteht, an deren Kreuzungspunkten durch Verschmelzen oder mit einem Bindemittel, um das Tuch herzustellen,
getrennt davon Bilden eines luftgelegten Gespinsts, das die thermoplastischen Fasern umfasst, und Verbinden der Fasern, aus denen das Gespinst besteht, an deren Kreuzungspunkten durch Verschmelzen oder mit einem Bindemittel, um den luftgelegten Vliesstoff herzustellen, und
Binden des luftgelegten Vliesstoffs an mindestens eine Seite des Tuchs.

13. Das Verfahren gemäß Anspruch 10, umfassend das Übereinanderlegen eines luftgelegten Gespinsts, das die thermoplastischen Fasern umfasst, auf mindestens eine Seite eines luftgelegten Gespinsts, das die Zellulosefasern mit einer Faserlänge von 0,1 bis 15 mm umfasst, und
Verbinden der Fasern, aus denen jedes dieser Gespinste besteht, untereinander an deren Kreuzungspunkten, um das Flüssigkeit zurückhaltende Tuch und den luftgelegten Vliesstoff zu bilden, und zudem Binden dieser Gespinste aneinander durch Verschmelzen oder mit einem Bindemittel, um das Flüssigkeit zurückhaltende Tuch und den luftgelegten Vliesstoff zu einem Körper zu laminieren.

**EP 1 211 342 B1**

**Revendications**

1. Chiffon de nettoyage qui est composé d'une feuille de rétention de liquide et d'un tissu non tissé air-laid sur au moins un côté de ladite feuille de rétention de liquide, ladite feuille de rétention de liquide et ledit tissu non tissé air-laid étant laminés ensemble en un seul corps,
ladite feuille de rétention de liquide constituée de fibres cellulosiques et de fibres thermocollantes ayant une longueur de fibre de 2 à 15 mm et une finesse de 0,5 à 5 dtex,
ledit tissu non tissé air-laid étant obtenu en formant une bande de tissu air-laid contenant d'épaisses fibres thermoplastiques ayant une longueur de fibre de 2 à 15 mm et une finesse de 10 à 150 dtex selon une quantité de 30 à 100 % en poids et en reliant ensuite les épaisses fibres thermoplastiques constituant ladite bande de tissu, par fusion ou avec un liant au niveau de leurs intersections,
ledit chiffon de nettoyage contenant de 10 à 90 % en poids desdites fibres thermoplastiques et de 10 à 90 % en poids desdites fibres de cellulose,
ledit chiffon de nettoyage ayant un grand nombre d'extrémités desdites fibres thermoplastiques épaisses exposées à la surface dudit chiffon de nettoyage pour avoir la capacité d'enlever ou de racler la saleté présente sur une surface souillée.

2. Chiffon de nettoyage selon la revendication 1, dans lequel lesdites fibres cellulosiques ont une longueur de fibre de 0,1 à 15 mm.

3. Chiffon de nettoyage selon l'une quelconque des revendications 1 ou 2, dans lequel ladite feuille de rétention de liquide contient de 30 à 100 % en poids desdites fibres cellulosiques et a un poids de base de 30 à 200 g/m$^2$, et ledit tissu non tissé air-laid a un poids de base de 30 à 200 g/m$^2$.

4. Chiffon de nettoyage selon l'une quelconque des revendications 1 à 3, qui a été gaufré.

5. Chiffon de nettoyage selon l'une quelconque des revendications 1 à 4, dans lequel lesdites fibres thermoplastiques comprennent une résine à faible point de fusion et une résine à haut point de fusion, ladite résine à faible point de fusion formant au moins une partie de la surface de fibres.

6. Chiffon de nettoyage selon l'une quelconque des revendications 1 à 5, dans lequel lesdites fibres thermoplastiques sont des fibres ondulées.

7. Chiffon de nettoyage selon la revendication 1, qui est imprégnée avec un détergent aqueux.

8. Chiffon de nettoyage selon la revendication 7, dans lequel ledit détergent aqueux contient un électrolyte.

9. Utilisation d'un chiffon de nettoyage selon l'une quelconque des revendications 1 à 8 pour nettoyer une surface souillée qui comprend la pulvérisation du chiffon de nettoyage avec un détergent aqueux et ensuite le frottement de la surface souillée avec le chiffon de nettoyage pulvérisé.

10. Procédé pour fabriquer un chiffon de nettoyage qui est composé d'une feuille de rétention de liquide et d'un tissu non tissé air-laid sur au moins un côté de ladite feuille de rétention de liquide, comprenant le laminage de ladite feuille de rétention de liquide et dudit tissu non tissé air-laid ensemble en un seul corps,
dans lequel ladite feuille de rétention de liquide est constituée de fibres cellulosiques et de fibres thermocollantes ayant une longueur de fibre de 2 à 15 mm et une finesse de 0,5 à 5 dtex,
le procédé comprenant en outre la formation d'une bande de tissu air-laid contenant d'épaisses fibres thermoplastiques ayant une longueur de fibre de 2 à 15 mm et une finesse de 10 à 150 dtex selon une quantité de 30 à 100 % en poids et ensuite la liaison des fibres thermoplastiques épaisses constituant ladite bande de tissu par fusion ou avec un liant au niveau de leurs intersections afin d'obtenir ledit tissu non tissé air-laid,
et dans lequel ledit chiffon de nettoyage contient de 10 à 90 % en poids desdites fibres thermoplastiques et de 10 à 90 % en poids de fibres cellulosiques,
ledit chiffon de nettoyage ayant un grand nombre d'extrémités desdites fibres thermoplastiques épaisses exposées à la surface dudit chiffon de nettoyage.

11. Procédé selon la revendication 10, dans lequel séparément de ladite feuille de rétention de liquide, ledit tissu non tissé air-laid est obtenu en formant une bande de tissu air-laid comprenant lesdites fibres thermoplastiques épaisses et des fibres thermoplastiques fines ayant une longueur de fibre de 2 à 15 mm et une finesse de 0,5 à 5 dtex et en reliant ensuite les fibres constituant ladite bande de tissu par fusion ou avec un liant au niveau de leurs intersections.

12. Procédé selon la revendication 10, comprenant la formation d'une bande de tissu air-laid comprenant lesdites fibres cellulosiques qui ont une longueur de fibre de 0,1 à 15 mm et la liaison des fibres constituant ladite bande de tissu au niveau de leurs intersections par fusion ou avec un liant pour préparer ladite feuille,
La formation séparément d'une bande de tissu air-laid comprenant lesdites fibres thermoplastiques et la liaison des fibres constituant ladite bande de tissu au niveau de leurs intersections par fusion ou avec un liant afin de préparer ledit tissu non tissé air-laid, et
La liaison dudit tissu non tissé air-laid à au moins un côté de ladite feuille.

13. Procédé selon la revendication 10, comprenant la superposition d'une bande de tissu air-laid comprenant lesdites fibres thermoplastiques sur au moins un côté d'une bande de tissu air-laid comprenant lesdites fibres cellulosiques qui ont une longueur de fibre de 0,1 à 15 mm, et
La liaison des fibres constituant chacune desdites bandes de tissu entre elles au niveau de leurs intersections afin de former ladite feuille de rétention de liquide et ledit tissu non tissé air-laid et également la liaison desdites bandes de tissu entre elles par fusion ou avec un liant afin de laminer ladite feuille de rétention de liquide et ledit tissu non tissé air-laid en un seul corps.

Fig.1

Fig.2

Fig.3

Fig. 4

Fig. 5

Fig. 6

Machine Direction

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4136252 A
- WO 9721865 A
- JP 2000328415 A
- JP 2000212866 A
- JP 2000367396 A
- JP 2001182619 A